# FASCICULE DE BREVET EUROPEEN

(11) **EP 2 208 917 B1**
(45) Date de publication et mention de la délivrance du brevet: **15.02.2012**
(21) Numéro de dépôt: 09179338.0
(22) Date de dépôt: 15.12.2009
(51) Int. Cl.: F16J 3/04, F16D 55/2265, F16D 65/00

(54) **Soufflet d'étanchéité d'étrier comportant un moyen d'aide au repliage**
Faltenbalg eines Bügels, der ein Hilfsmittel zum Zusammenklappen umfasst
Bellow of a calliper comprising means to help folding

(30) Priorité: 14.01.2009 FR 0900151
(43) Date de publication de la demande: 21.07.2010
(73) Titulaire: Robert Bosch GmbH, 70442 Stuttgart (DE)
(72) Inventeur: Moirand, Bernard, 93600 Aulnay-sous-Bois (FR); Kubic, Olivier, 91400 ORSAY (FR); Oudin, Nicolas, 77186, NOISIEL (FR); Fourichon, Arnaud, 75010 PARIS (FR)
(74) Mandataire: Hurwic, Aleksander Wiktor

(56) Documents cités:
- BE-A- 350 235
- FR-A- 2 416 403
- FR-A- 2 685 749

## Description

L'invention concerne un soufflet tronconique d'étanchéité pour un piston d'étrier d'un frein à disque de véhicule automobile.

L'invention concerne plus particulièrement un soufflet tronconique d'étanchéité pour un piston d'étrier d'un frein à disque de véhicule automobile, pouvant être reçu dans une gorge annulaire d'extrémité qui est formée dans un corps de l'étrier à l'extrémité d'un alésage recevant le piston, qui comporte un premier pli extérieur dont une extrémité libre peut être fixée à une paroi interne de la gorge, au moins un pli intermédiaire, un avant-dernier pli et un dernier pli intérieur dont une extrémité libre pouvant être reçue dans une gorge du piston, et qui est mobile :
- une position rétractée, correspondant à une position rétractée du piston, dans laquelle le premier pli, le pli intermédiaire et l'avant-dernier pli sont agencés radialement les uns au dessus des autres,
- une position déployée, correspondant à une position étendue du piston, dans laquelle les plis s'étendent axialement entre la gorge de l'étrier et la gorge du piston, pour protéger la surface du piston d'éventuels corps étrangers ou de poussières.

On connaît de nombreux exemples de soufflets étanchéité de ce type, notamment décrit dans les documents FR 2685 749 et FR 2416 403.

De tels soufflets sont notamment destinés à protéger la surface extérieure du piston, qui est reçu en coulissement dans l'alésage de l'étrier, des différentes poussières et corps étrangers qui pourraient détériorer l'alésage et/ou provoquer un coincement du piston dans l'étrier.

Au cours de l'usure des garnitures des plaquettes du frein à disque associé, le piston, qui est initialement reçu presque en totalité dans l'alésage lorsque les garnitures sont neuves et présentent une épaisseur maximale, sort de l'alésage pour compenser l'usure des garnitures desdites plaquettes.

Ainsi, au cours de l'usure des plaquettes, le soufflet accompagne la sortie du piston pour protéger sa surface extérieure.

Lors du remplacement des plaquettes de frein, il est nécessaire de repousser le piston dans l'étrier pour permettre le montage de nouvelles plaquettes de frein.

Au cours de cette opération, les soufflets conventionnels tendent à se vriller spontanément, l'avant-dernier pli présentant des ondulations préjudiciables à la bonne résistance dudit soufflet.

Il s'ensuit généralement à plus ou moins longue échéance une déchirure du soufflet qui ne remplit alors plus son rôle d'étanchéité.

L'invention remédie à cet inconvénient en proposant un soufflet comportant des moyens permettant d'éviter de telles déchirures.

Dans ce but, l'invention propose un soufflet du type décrit précédemment, l'avant-dernier pli comportant au moins un moyen d'aide au repliage, pour éviter que ledit avant-dernier pli ne se déforme en ondulant lorsque le soufflet passe de sa position déployée à sa position rétractée.
Caractérisé en ce que
- un premier moyen d'aide au repliage comporte au moins un élément de renfort qui s'étend axialement sur la périphérie de l'avant-dernier pli,
- l'élément de renfort s'étend sur toute la longueur de la périphérie extérieure de l'avant dernier pli,
- l'élément de renfort est constitué d'une nervure longitudinale venue de matière avec le matériau élastomère du soufflet,
- le premier moyen d'aide au repliage comporte une pluralité d'éléments de renforts répartis angulairement de manière régulière autour de la périphérie de l'avant-dernier pli,
- un second moyen d'aide au repliage comporte au moins un élément de butée, agencé à la jonction de l'avant-dernier pli et du dernier pli, qui est destiné à entrer en contact avec le pli intermédiaire lors du passage du soufflet de sa position déployée à sa position rétractée, pour éviter que l'avant-dernier pli ne se déforme en ondulant lorsque le soufflet passe de sa position déployée à sa position rétractée,
- l'élément de butée est constitué d'un picot venu de matière avec le matériau élastomère du soufflet,
- le picot est sensiblement conformé en crochet, de concavité tournée vers l'étrier, pour coopérer avec la jonction du pli intermédiaire et du premier pli,
- le second moyen d'aide au repliage comporte une pluralité d'éléments de butée répartis angulairement de manière régulière autour de la périphérie de la jonction de l'avant-dernier pli et du dernier pli,
- la jonction du pli intermédiaire et de l'avant-dernier pli comporte un bourrelet annulaire destinés à faciliter la rotation relative du pli intermédiaire et de l'avant-dernier pli sur une face de fond de la gorge et sur la périphérie du piston.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en demi-coupe axiale d'un soufflet réalisé selon un état antérieur de la technique, représenté lors du passage de sa position déployée à sa position rétractée ;
- la figure 2 est une vue schématique en demi-coupe axiale d'un soufflet de l'invention représenté dans sa position rétractée ;
- la figure 3 est une vue schématique partielle en coupe transversale par le plan 3-3 de la figure 2 du soufflet de la figure 2 ;
- les figures 4 et 5 sont des vues schématiques en demi-coupe axiale du soufflet de la figure 2 lors du passage de sa position déployée à sa position rétractée ;
- la figure 6 est une vue schématique en demi-coupe axiale d'un soufflet de l'invention représenté dans sa position rétractée ;
- les figures 7 et 8 sont des vues schématiques en demi-coupe axiale du soufflet de la figure 6 lors du passage de sa position déployée à sa position rétractée.

Dans la description qui va suivre, des chiffres de référence identiques désignent des pièces identiques ou ayant des fonctions similaires.

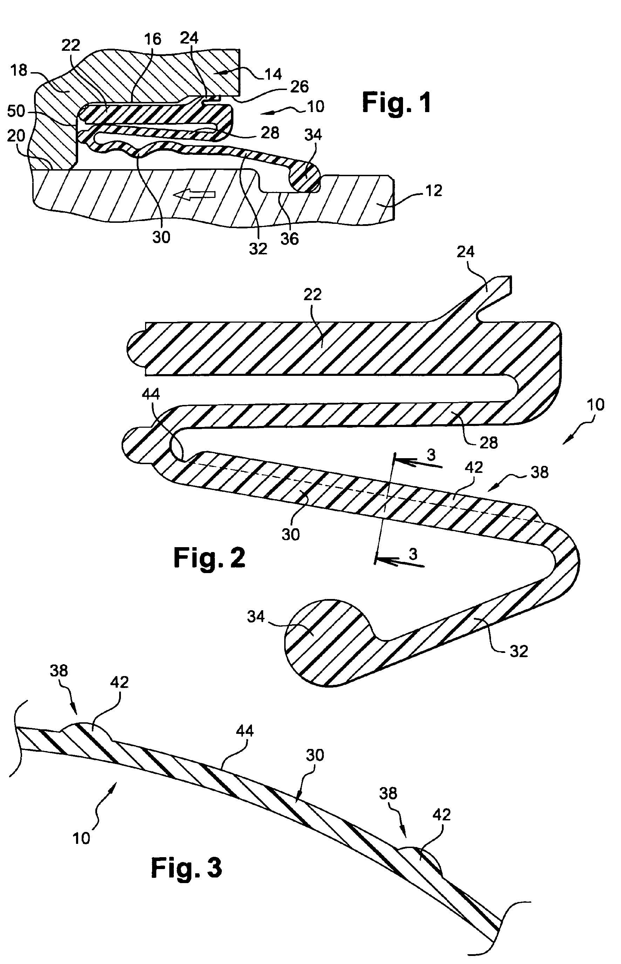

On a représenté à la figure 1 un soufflet tronconique 10 d'étanchéité pour un piston 12 d'un étrier 14 d'étrier d'un frein à disque (non représenté) de véhicule automobile.

De manière connue, le soufflet 10 est reçu dans une gorge annulaire 16 d'extrémité qui est formée dans un corps 18 de l'étrier 14 à l'extrémité d'un alésage 20 recevant le piston 12.

Le soufflet 10 comporte un premier pli extérieur 22 dont une extrémité libre 24 est fixée à une paroi interne 26 de la gorge 16, au moins un pli intermédiaire 28, un avant-dernier pli 30 et un dernier pli intérieur 32 dont une extrémité libre 34 est reçue dans une gorge 36 du piston 12. A cet effet, l'extrémité libre 34 du dernier pli intérieur 32 est par exemple conformée sous la forme d'un bourrelet pouvant être reçu par emboîtement dans la gorge 36 du piston 12.

Le soufflet 10 est destiné à accompagner le piston 12 lors de sa sortie de l'alésage 20 au fur et à mesure de l'usure des garnitures de plaquettes de frein associées, pour protéger la surface extérieure du piston 12 d'éventuelles poussières ou d'éventuels résidus qui seraient préjudiciables au bon coulissement du piston 12 dans l'alésage 20.

A cet effet, le soufflet 10 est mobile entre :
- une position rétractée, représenté à la figure 1, et correspondant à une position rétractée du piston 12, dans laquelle le premier pli 22, le pli intermédiaire 28 et l'avant-dernier pli 30 sont agencés radialement les uns au dessus des autres, et
- une position déployée (non représenté), correspondant à une position étendue du piston 12, dans laquelle les plis 22, 28, 30 et 32 s'étendent axialement entre la gorge 16 de l'étrier et la gorge 36 du piston 12, pour protéger la surface du piston 12 d'éventuels corps étrangers ou de poussières.

Un inconvénient connu de cette conception conventionnelle se manifeste lors du remplacement des plaquettes du frein à disque associé.

En effet, lors de cette opération, il est nécessaire de repousser le piston 12 dans l'alésage 20 de l'étrier 14 pour rattraper le jeu correspondant à l'épaisseur de garniture des plaquettes qui a disparu lors de l'usure, et cette opération s'accompagne généralement d'une déformation de l'avant-dernier pli 30 du soufflet 10 qui se vrille en formant des ondulations, comme représenté à la figure 1.

Cette déformation de l'avant-dernier pli 30 est préjudiciable à la résistance du soufflet 10 et peut provoquer une déchirure dudit soufflet, qui ne remplit alors plus son rôle étanchéité.

L'invention remédie à cet inconvénient en proposant des moyens permettant d'éviter la déformation de l'avant-dernier pli 30 du soufflet 10.

Dans ce but, l'invention propose un soufflet 10 du type décrit précédemment, caractérisé en ce que l'avant-dernier pli 30 comporte au moins un moyen 38, 40 d'aide au repliage, pour éviter que ledit avant-dernier pli 30 ne se déforme en ondulant lorsque le soufflet 10 passe de sa position déployée à sa position rétractée.

Ainsi, selon une caractéristique de l'invention qui a été représentée aux figures 2, 3, 4 et 5 un premier moyen 38 d'aide au repliage comporte au moins un élément 42 de renfort qui s'étend axialement sur la périphérie de l'avant-dernier pli 30.

Plus particulièrement, de préférence, comme l'illustre la figure 2, l'élément de renfort 42 s'étend sur toute la longueur de la périphérie extérieure 44 de l'avant dernier pli 30.

Plusieurs modes de réalisation sont envisageables pour l'obtention d'un élément de renfort 42 conforme à l'invention.

Toutefois, de préférence, l'élément de renfort 42 est constitué d'une nervure longitudinale 42 venue de matière avec le matériau élastomère du soufflet 10.

Par ailleurs, pour assurer un maintien optimal de toute la périphérie l'avant-dernier pli 30 du soufflet 10 lors du passage dudit soufflet 10 de sa position déployée à sa position rétractée, le premier moyen 38 d'aide au repliage comporte une pluralité d'éléments 42 de renforts répartis angulairement de manière régulière autour de la périphérie 44 de l'avant-dernier pli 30, comme représenté à la figure 3.

Il sera compris que la largeur et la rigidité des éléments 42 de renfort détermineront leur nombre sur la périphérie 44 de l'avant-dernier pli 30. A titre d'exemple, et de manière non limitative de l'invention, la périphérie 44 l'avant-dernier pli 30 comportera de préférence environ huit éléments 42 de renforts répartis angulairement de manière régulière.

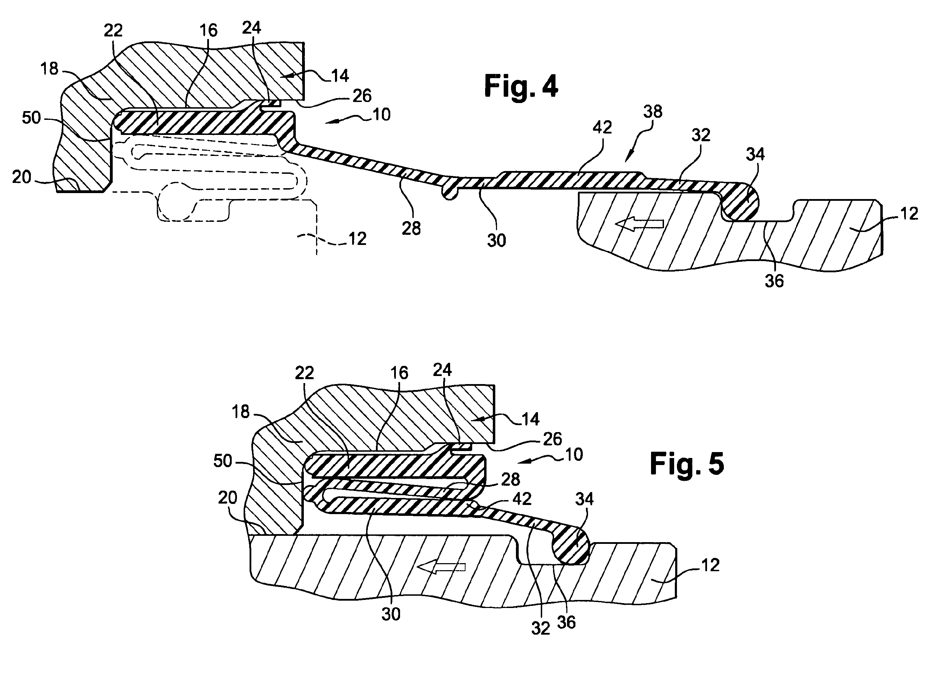

Le soufflet 10 ainsi muni de l'élément de renfort 42 peut donc être replié de sa position déployée de la figure 4 à sa position rétractée de la figure 5 sans que l'avant-dernier pli 30 ne se déforme.

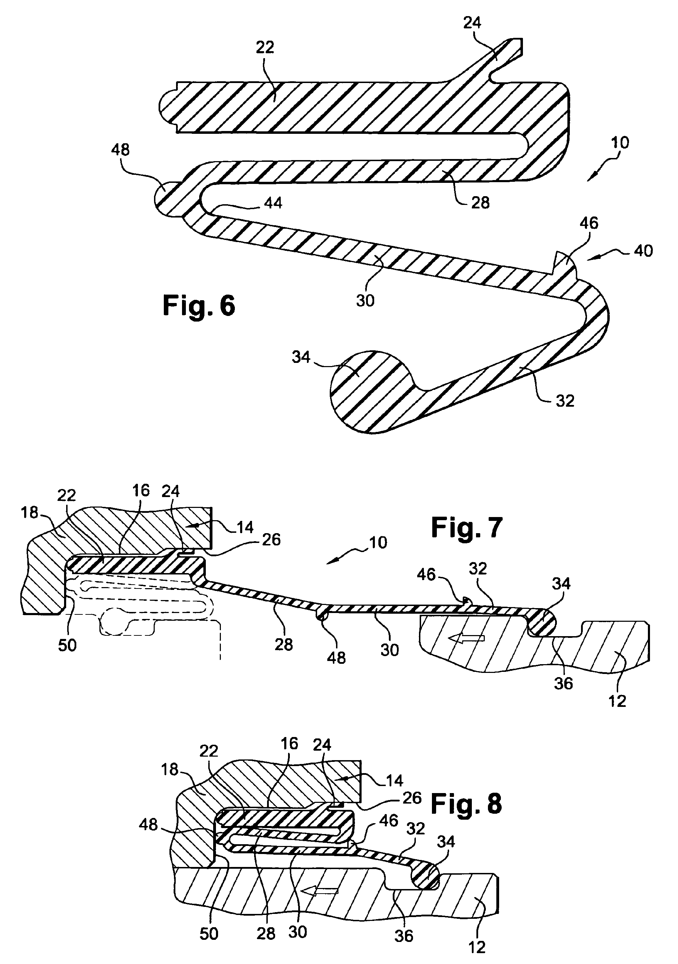

Selon une caractéristique de l'invention qui a été représentée aux figures 6 à 8, un second moyen 40 d'aide au repliage comporte au moins un élément 46 de butée, agencé à la jonction de l'avant-dernier pli 30 et du dernier pli 32, qui est destiné à entrer en contact avec le pli intermédiaire 28 lors du passage du soufflet 10 de sa position déployée à sa position rétractée, pour éviter que l'avant-dernier pli 30 ne se déforme en ondulant lorsque le soufflet 10 passe de sa position déployée à sa position rétractée.

Il sera donc compris que l'élément 46 de butée est nécessairement agencé à l'extérieur du soufflet 10.

De préférence, l'élément 46 de butée est constitué d'un picot 46 venu de matière avec le matériau élastomère du soufflet 10.

Comme l'illustrent les figures 7 et 8, le picot 46 permet de reporter l'effort de repli du soufflet 10 sur le pli intermédiaire 28 en entrant en contact avec celui-ci, ce qui permet d'éviter la déformation par ondulation de l'avant-dernier pli 30.

Selon une configuration particulière, le picot 46 est sensiblement conformé en crochet, de concavité tournée vers l'étrier 14. Cette configuration permet au picot 46 non seulement de coopérer avec le pli intermédiaire 28, mais plus précisément de coopérer avec la jonction du pli intermédiaire 28 et du premier pli 22, ce qui permet de reporter les efforts sur ces deux plis.

D'une manière analogue au premier mode de réalisation de l'invention, il sera compris que le second moyen 40 d'aide au repliage comporte une pluralité d'éléments 46 de butée répartis angulairement de manière régulière autour de la périphérie de la jonction de l'avant-dernier pli 30 et du dernier pli 32.

Enfin, on remarquera que la jonction du pli intermédiaire 28 et de l'avant-dernier pli 30 comporte un bourrelet annulaire 48.

Dans la position déployée du soufflet 10, ce bourrelet annulaire 48 est destiné, en prenant appui sur la périphérie du piston 12, à faciliter la rotation relative du pli intermédiaire 28 et de l'avant-dernier pli 30.

Dans la position rétracté du soufflet 10, ce bourrelet annulaire 48 est destiné, en prenant appui sur une face de fond 50 de la gorge 16 à faciliter la rotation relative du pli intermédiaire 28 et de l'avant-dernier pli 30.

L'invention permet donc avantageusement de proposer un soufflet 10 ne présentant que peu de risques de déchirure lors de son repli.

## Revendications

1. Soufflet (10) tronconique d'étanchéité pour un piston (12) d'un étrier (14) d'un frein à disque de véhicule automobile, pouvant être reçu dans une gorge (16) annulaire d'extrémité qui est formée dans un corps (18) de l'étrier (14) à l'extrémité d'un alésage (20) recevant le piston (12), qui comporte un premier pli extérieur (22) dont une extrémité libre (24) pouvant être fixée à une paroi interne de la gorge, au moins un pli intermédiaire (28), un avant-dernier pli (30) et un dernier pli intérieur (32) dont une extrémité libre (34) peut être reçue dans une gorge (36) du piston (12), et qui est mobile :
- une position rétractée, correspondant à une position rétractée du piston (12), dans laquelle le premier pli (22), le pli intermédiaire (28) et l'avant-dernier pli (30) sont agencés radialement les uns au dessus des autres,
- une position déployée, correspondant à une position étendue du piston (12), dans laquelle les plis (22, 28, 30, 32) s'étendent axialement entre la gorge (16) de l'étrier (14) et la gorge (36) du piston (12), pour protéger la surface du piston (12) d'éventuels corps étrangers ou de poussières,
- l'avant-dernier pli (30) comporte des moyens (38, 40) d'aide au repliage, pour éviter que ledit avant-dernier pli (30) ne se déforme en ondulant lorsque le soufflet (10) passe de sa position déployée à sa position rétractée, **caractérisé en ce que** le premier moyen (38) d'aide au repliage comporte au moins un élément de renfort (42) qui s'étend axialement sur la périphérie (44) de l'avant-dernier pli (30), et **en ce que** le second moyen (40) d'aide au repliage comporte au moins un élément (46) de butée, agencé à la jonction de l'avant-dernier pli (30) et du dernier pli (32), qui est destiné à entrer en contact avec le pli intermédiaire (28) lors du passage du soufflet (10) de sa position déployée à sa position rétractée, pour éviter que l'avant-dernier pli (30) ne se déforme en ondulant lorsque le soufflet (10) passe de sa position déployée à sa position rétractée.

2. Soufflet (10) selon la revendication précédente, **caractérisé en ce que** l'élément de renfort (42) s'étend sur toute la longueur de la périphérie extérieure (44) de l'avant dernier pli (30).

3. Soufflet (10) selon l'une des revendications 1 ou 2, **caractérisé en ce que** l'élément (42) de renfort est constitué d'une nervure longitudinale venue de matière avec le matériau élastomère du soufflet (10).

4. Soufflet (10) selon l'une des revendications 1 à 3, **caractérisé en** le premier moyen (38) d'aide au repliage comporte une pluralité d'éléments (42) de renforts répartis angulairement de manière régulière autour de la périphérie (44) de l'avant-dernier pli (30).

5. Soufflet (10) selon la revendication 1, **caractérisé en ce que** l'élément (46) de butée est constitué d'un picot (46) venu de matière avec le matériau élastomère du soufflet (10).

6. Soufflet (10) selon la revendication précédente, **caractérisé en ce que** le picot (46) est sensiblement conformé en crochet, de concavité tournée vers l'étrier (14), pour coopérer avec la jonction du pli intermédiaire (28) et du premier pli (22).

7. Soufflet (10) selon l'une des revendications 1 à 6, **caractérisé en ce que** le second moyen (40) d'aide au repliage comporte une pluralité d'éléments (46) de butée répartis angulairement de manière régulière autour de la périphérie de la jonction de l'avant-dernier pli (30) et du dernier pli (32).

8. Soufflet (10) selon l'une quelconque des revendications précédentes **caractérisé en ce que** la jonction du pli intermédiaire (28) et de l'avant-dernier pli (30) comporte un bourrelet annulaire (48) destinés à faciliter la rotation relative du pli intermédiaire (28) et de l'avant-dernier pli (30) sur une face de fond (50) de la gorge (16) et sur la périphérie du piston (12).

## Claims

1. Frustoconical sealing bellows (10) for a piston (12) of a calliper (14) of an automotive vehicle brake disc housed in an annular end groove (16) formed in a body (18) of the calliper (14) at the end of a bore (20) accommodating the piston (12), which has an external first fold (22), of which a free end (24) can be fixed to an internal wall of the groove, at least one intermediate fold (28), a penultimate fold (30) and an internal last fold (32) of which a free end (34) can be housed in a groove (36) of the piston (12), and which is able to move:
- a retracted position, corresponding to a retracted position of the piston (12), in which position the first fold (22), the intermediate fold (28) and the penultimate fold (30) are arranged radially on top of one another,
- a deployed position corresponding to an extended position of the piston (12), in which position the folds (22, 28, 30, 32) extend axially between the groove (16) of the calliper (14) and the groove (36) of the piston (12) to protect the surface of the piston (12) from any foreign bodies or dust,
- the penultimate fold (30) comprises means (38, 40) to help with folding to prevent the said penultimate fold (30) from deforming in a wavy manner as the bellows (10) changes from its deployed position to its retracted position, **characterized in that** the first means (38) to help with folding comprises at least one reinforcing element (42) which extends axially over the periphery (44) of the penultimate fold (30), and **in that** the second means (40) to help with folding comprises at least one end stop element (46), arranged where the penultimate fold (30) meets the last fold (32) and which is intended to come into contact with the intermediate fold (26) as the bellows (10) changes from its deployed position to its retracted position so as to prevent the penultimate fold (30) from deforming in a wavy manner when the bellows (10) changes from its deployed position to its retracted position.

2. Bellows (10) according to the preceding claim, **characterized in that** the reinforcing element (42) extends over the entire length of the exterior periphery (44) of the penultimate fold (30).

3. Bellows (10) according to one of Claims 1 and 2, **characterized in that** the reinforcing element (42) consists of a longitudinal rib formed as an integral part of the elastomeric material of the bellows (10).

4. Bellows (10) according to one of Claims 1 to 3, **characterized in that** the first means (38) to help with folding comprises a plurality of reinforcing elements (42) evenly angularly distributed about the periphery (44) of the penultimate fold (30).

5. Bellows (10) according to Claim 1, **characterized in that** the end stop element (46) consists of a stud (46) formed as an integral part of the elastomeric material of the bellows (10).

6. Bellows (10) according to the preceding claim, **characterized in that** the stud (46) is more or less shaped as a hook, with its concave side facing towards the calliper (14), to engage with the junction where the intermediate fold (28) meets the first fold (22).

7. Bellows (10) according to one of Claims 1 to 6, **characterized in that** the second means (40) to help with folding comprises a plurality of end stop elements (46) evenly angularly distributed about the periphery of the junction where the penultimate fold (30) meets the last fold (32).

8. Bellows (10) according to any one of the preceding claims, **characterized in that** the junction between the intermediate fold (28) and the penultimate fold (30) includes an annular bulge (48) intended to make it easier for the intermediate fold (28) and the penultimate fold (30) to effect a relative rotation on an end face (50) of the groove (16) and on the periphery of the piston (12).

## Patentansprüche

1. Kegelstumpfartiger Dichtungsbalg (10) für einen Kolben (12) eines Sattels (14) einer Kraftfahrzeugscheibenbremse, der in einer ringförmigen Endnut (16) aufgenommen werden kann, die in einem Körper (18) des Sattels (14) am Ende einer den Kolben (12) aufnehmenden Bohrung (20) ausgebildet ist, der eine erste, äußere Falte (22) aufweist, bei der ein freies Ende (24) an einer Innenwand der Nut befestigt werden kann, mindestens eine Zwischenfalte (28), eine vorletzte Falte (30) und eine letzte, innere Falte (32), bei der ein freies Ende (34) in einer Nut (36) des Kolbens (12) aufgenommen werden kann, und der beweglich ist:
- eine eingezogene Stellung, die einer eingezogenen Stellung des Kolbens (12) entspricht, bei der die erste Falte (22), die Zwischenfalte (28) und die vorletzte Falte (30) radial übereinander angeordnet sind,
- eine entfaltete Stellung, die einer ausgestreckten Stellung des Kolbens (12) entspricht, bei der sich die Falten (22, 28, 30, 32) axial zwischen der Nut (16) des Sattels (14) und der Nut (36) des Kolbens (12) erstrecken, um die Oberfläche des Kolbens (12) vor möglichen Fremdkörpern oder Staub zu schützen,
- wobei die vorletzte Falte (30) Mittel (38, 40) zur Unterstützung beim Zusammenfalten aufweist, um zu verhindern, dass sich die vorletzte Falte (30) durch eine wellenförmige Bewegung verformt, wenn der Balg (10) von seiner entfalteten Stellung in seine eingezogene Stellung übergeht, **dadurch gekennzeichnet, dass** das erste Mittel (38) zur Unterstützung beim Zusammenfalten mindestens ein Verstärkungselement (42) aufweist, das sich axial am Umfang (44) der vorletzten Falte (30) erstreckt, und das zweite Mittel (40) zur Unterstützung beim Zusammenfalten mindestens ein Anschlagelement (46) aufweist, das an der Verbindungsstelle zwischen der vorletzten Falte (30) und der letzten Falte (32) angeordnet und dazu vorgesehen ist, mit der Zwischenfalte (28) in Kontakt zu gelangen, wenn der Balg (10) von seiner entfalteten Stellung in seine eingezogene Stellung übergeht, um zu verhindern, dass sich die vorletzte Falte (30) durch eine wellenförmige Bewegung verformt, wenn der Balg (10) von seiner entfalteten Stellung in seine eingezogene Stellung übergeht.

2. Balg (10) nach dem vorhergehenden Anspruch, **dadurch gekennzeichnet, dass** sich das Verstärkungselement (42) über die gesamte Länge des Außenumfangs (44) der vorletzten Falte (30) erstreckt.

3. Balg (10) nach einem der Ansprüche 1 oder 2, **dadurch gekennzeichnet, dass** das Verstärkungselement (42) aus einer Längsrippe gebildet ist, die mit dem Elastomermaterial des Balgs (10) einstückig ausgebildet ist.

4. Balg (10) nach einem der Ansprüche 1 bis 3, **dadurch gekennzeichnet, dass** das erste Mittel (38) zur Unterstützung beim Zusammenfalten mehrere Verstärkungselemente (42) aufweist, die winkelmäßig gleichmäßig um den Umfang (44) der vorletzten Falte (30) verteilt sind.

5. Balg (10) nach Anspruch 1, **dadurch gekennzeichnet, dass** das Anschlagelement (46) aus einer Nase (46) gebildet ist, die mit dem Elastomermaterial des Balgs (10) einstückig ausgebildet ist.

6. Balg (10) nach dem vorhergehenden Anspruch, **dadurch gekennzeichnet, dass** die Nase (46) im Wesentlichen hakenförmig mit einer zum Sattel (14) gewandten Konkavität ausgebildet ist, um mit der Verbindungsstelle zwischen der Zwischenfalte (28) und der ersten Falte (22) zusammenzuwirken.

7. Balg (10) nach einem der Ansprüche 1 bis 6, **dadurch gekennzeichnet, dass** das zweite Mittel (40) zur Unterstützung beim Zusammenfalten mehrere Anschlagelemente (46) aufweist, die winkelmäßig gleichmäßig um den Umfang der Verbindungsstelle zwischen der vorletzten Falte (30) und der letzten Falte (32) verteilt sind.

8. Balg (10) nach einem der vorhergehenden Ansprüche, **dadurch gekennzeichnet, dass** die Verbindungsstelle zwischen der Zwischenfalte (28) und der vorletzten Falte (30) eine ringförmige Verdickung (48) aufweist, die dazu vorgesehen ist, die relative Drehung zwischen der Zwischenfalte (28) und der vorletzten Falte (30) auf einer hinteren Fläche (50) der Nut (16) und auf dem Umfang des Kolbens (12) zu vereinfachen.
